# EUROPÄISCHE PATENTSCHRIFT

(11) **EP 2 170 974 B1**
(45) Veröffentlichungstag und Bekanntmachung des Hinweises auf die Patenterteilung: **05.10.2016**
(21) Anmeldenummer: 08784618.4
(22) Anmeldetag: 04.07.2008
(51) Int. Cl.: C08G 18/67, C08G 18/79, C09D 175/16

(54) **UNIVERSELLER SPOTBLENDER FÜR EINKOMPONENTEN- UND ZWEIKOMPONENTENKLARLACKE**
UNIVERSAL SPOT BLENDER FOR ONE-COMPONENT AND TWO-COMPONENT CLEARCOATINGS
MÉLANGEUR INSTANTANÉ UNIVERSEL POUR VERNIS TRANSPARENT À UN COMPOSANT OU À DEUX COMPOSANTS

(30) Priorität: 06.07.2007 DE 102007031594
(43) Veröffentlichungstag der Anmeldung: 07.04.2010
(73) Patentinhaber: BASF Coatings GmbH, 48165 Münster (DE)
(72) Erfinder: NIENHAUS, Egbert, 59387 Ascheberg (DE); LETTMANN, Bernhard, 48317 Drensteinfurt (DE); REIZE, Klaus-Udo, 48165 Münster (DE); RADEMACHER, Josef, 48165 Münster (DE)
(74) Vertreter: Leifert & Steffan
(86) Internationale Anmeldenummer: PCT/EP2008/005477
(87) Internationale Veröffentlichungsnummer: WO 2009/007063

(56) Entgegenhaltungen:
- WO-A2-2007/123854
- DE-A1-102005 012 588
- DE-A1-102005 012 589
- US-A1- 2004 146 638
- US-A1- 2005 209 433
- US-A1- 2007 048 441

## Beschreibung

Die vorliegende Erfindung betrifft die Verwendung einer bindemittelfreien Zusammensetzung als Spot-Blender für Einkomponenten- und Zweikomponentenklarlacke in der Kraftfahrzeugreparaturlackierung.

Bei der Kraftfahrzeugreparaturlackierung werden im Falle großer Schadstellen üblicherweise die beschädigten Teile der Karosserien entnommen und vollflächig reparaturlackiert. Bei Kleinstschäden, die gerade bei neuen und/oder besonders hochwertigen Kraftfahrzeugen sehr ärgerlich sind, wie etwa Schlüsselkratzern oder Remplern (beispielsweise an einer Parkplatzbegrenzung), ist diese Verfahrensweise aber sehr aufwändig und der Größe des Schadens nicht angemessen. Kleinstschäden werden daher vorzugsweise mit Hilfe von Verfahren zur KFZ-Kleinstreparatur im Teil behoben. Diese Verfahren werden von der Fachwelt auch als Punktausbesserung oder Spot-Repair bezeichnet.

Die bekannten Spot-Repair-Verfahren weisen aber zahlreiche Nachteile auf und sind schwierig durchzuführen. So sind häufig die Auslaufzonen des Klarlack-Spritznebels auf der Originallackierung zu weit, was die optische Anpassung von Reparaturlackierung und Originallackierung erschwert. Außerdem kann die Reparatur-Klarlackierung wegen einer schlechten Haftung auf der Originallackierung in den Auslaufzonen um die Schadstelle die Reparatur-Klarlackierung wegbrechen oder ausreißen. Dadurch entstehen deutlich sichtbare Kanten, die die Reparatur-Klarlackierung, die sich unmittelbar über der Originallackierung befindet, sogar ganz umlaufen können. Die Reparaturlackierung wirkt dann wegen der optisch harten Übergangszonen insgesamt wie ein "aufgeklebtes Pflaster".

Man hat versucht, die Probleme des Wegbrechens oder Ausreißens und der schwierigen Anpassung der optischen Eigenschaften in den Auslaufzonen dadurch zu lösen, dass man so genannte Spotblender über die ungehärtete Reparatur-Klarlackierung appliziert. Hierdurch sollen besonders "weiche" Übergangszonen erzeugt und verhindert werden, dass die Reparatur-Klarlackierung in den Randzonen zur Originallackierung ausreißt.

Aus der deutschen Patentanmeldung DE 100 43 810 A1 ist ein Spot-Repair-Verfahren bekannt, mit welchem die Schleif- und/oder Polierzeiten im Vergleich zu herkömmlichen Verfahren um mehr als 50 % gesenkt werden können. Die aus der DE 100 43 810 A1 bekannte Spot-Repair-Bindemittelzusammensetzung eignet sich jedoch nur für Zweikomponentenklarlacke auf der Basis von hydroxylgruppenhaltigen Bindemitteln. Andere Klarlacke, insbesondere Einkomponentenklarlacke, können mittels dem Spot-Repair-Verfahren der DE 100 43 810 A1 nicht hergestellt werden.

Aus der deutschen Patentanmeldung DE 10 2005 012 589 A1 mit dem Namen "Mit UV-A-Strahlung härtbares, lösemittelhaltiges Gemisch, Verfahren zu seiner Herstellung und seine Verwendung" ist eine Zusammensetzung bekannt, welche aus den folgenden Bestandteilen besteht:
(A) 1 bis 50 Gew.-% mindestens eines mit UV-A-Strahlung härtbaren Bestandteils, ausgewählt aus der Gruppe, bestehend aus Monomeren (a1), enthaltend mindestens drei mit UV-A-Strahlung härtbare reaktive funktionelle Gruppen und mindestens eine isocyanatreaktive funktionelle Gruppe und Gemischen (a2) aus von isocyanatreaktiven funktionellen Gruppen freien Monomeren (a21), enthaltend mindestens zwei mit UV-A-Strahlung härtbare reaktive funktionelle Gruppen, und Monomeren (a22), enthaltend mindestens zwei mit UV-A-Strahlung härtbare reaktive funktionelle Gruppen und mindestens eine isocyanatreaktive funktionelle Gruppe;
(B) 0,01 bis 10 Gew.-% mindestens eines farblosen oder im Wesentlichen farblosen Photoinitiators mit mindestens einem Absorptionsmaximum im Wellenlängenbereich von A = 300 bis 400 nm;
(C) 10 bis 70 Gew.-% mindestens eines Alkyl- und/oder Cycloalkylacetats mit 3 bis 10 Kohlenstoffatomen im Alkylrest und/oder im Cycloalkylrest;
(D) 10 bis 70 Gew.-% mindestens eines Alkoxyalkyl-, Alkoxycycloalkyl-, Cycloalkoxyalkyl- und/oder Cycloalkoxycycloalkylacetats;
(E) 0,001 bis 5 Gew.-% mindestens eines die Grenzflächenspannung herabsetzenden Bestandteils und
(F) 0 bis 50 Gew.-% mindestens eines Alkylaromaten mit mindestens zwei Alkylresten mit 1 bis 6 Kohlenstoffatomen im Molekül; und
(G) 0 bis 50 Gew.-% mindestens eines von den Bestandteilen (A) bis (F) verschiedenen Zusatzstoffs.

Nachteilig an dieser Zusammensetzung ist, dass sie sich, ähnlich wie die aus der DE 100 43 810 A1 bekannte Zusammensetzung, nicht universell für Einkomponenten- und Zweikomponentenklarlacke gleichzeitig eignet und darüber hinaus nach einer Härtung unter UV-Bestrahlung immer noch leichte Randmarkierungen an der Polierkante liefert.

Die Patentmeldung US 2004/0146638 A1 beschreibt ein Verfahren für die Reparatur einer Mehrschichtlackierung eines Substrats. Hierbei wird die beschädigte Stelle geschliffen und ggf. gereinigt. Dann wird ein pigmentierter Basislack in die intakten Bereiche auslaufend aufgebracht. Danach wird ein wässriger 2-Komponenten-Klarlack aufgebracht, der in die intakten Bereiche ausläuft. Weiterhin wird ein pigmentierter 1-Schicht-Decklack aufgebracht, der wiederum in die intakten Bereiche ausläuft. Abschließend wird die resultierende Beschichtung gehärtet und ggf. geschliffen und poliert.

Aufgabe der vorliegenden Erfindung ist es demgemäß, die Verwendung einer härtbaren Zusammensetzung bereitzustellen, welche sich als Spotblender in Spot-Repair-Verfahren einsetzen lässt und welche in Kombination mit Einkomponentenklarlacken und Zweikomponentenklarlacken, vorzugsweise ohne Änderung der Zusammensetzung der härtbaren Zusammensetzung, verwendet werden kann. Vorzugsweise sollen die härtbaren Zusammensetzungen sowohl mit UV-Strahlung und thermisch als auch nur thermisch härtbar sein.

Die erfindungsgemäß bereitzustellende Verwendung soll es ferner vorzugsweise ermöglichen, Reparaturlackierungen zu liefern, welche in sehr kurzer Zeit geschliffen und/oder poliert werden können, sich optisch nicht mehr von der Originallackierung abheben, kein Ausreißen oder Wegbrechen in den Auslaufzonen mehr zeigen und von so hoher Qualität sind, dass sie auch zur KFZ-Kleinstreparatur im Teil von Originallackierungen in der Linie verwendet werden können.

Gelöst wird diese Aufgabe durch die Verwendung einer bindemittelfreien Spot-Blender-Zusammensetzung für Einkomponenten- und Zweikomponentenklarlacke in der Kraftfahrzeugreparaturlackierung, insbesondere in der KFZ-Kleinstreparatur im Teil (Spot-Repair).

Die bindemittelfreie Spot-Blender-Zusammensetzung ist dadurch gekennzeichnet, dass sie mindestens 2 bis 30 Gew.-% einer Isocyanatverbindung und mindestens ein organisches Lösemittel enthält. Die Spot-Blender-Zusammensetzung wird im Folgenden als "erfindungsgemäß zu verwendende Zusammensetzung" bezeichnet.

Die aus dem einschlägigen Stand der Technik bekannten Spot-Blender-Zusammensetzungen enthalten im Allgemeinen Bindemittel-Zusammensetzungen, während die erfindungsgemäß zu verwendende Spot-Blender-Zusammensetzung bindemittelfrei ist.

Weitere Erfindungsgegenstände gehen aus der Beschreibung hervor.

Im Hinblick auf den Stand der Technik war es überraschend und für den Fachmann nicht vorhersehbar, dass die Aufgabe, die der vorliegenden Erfindung zugrunde lag, mit Hilfe der erfindungsgemäßen Verwendung gelöst werden konnte.

Insbesondere war es überraschend, dass sich die erfindungsgemäß zu verwendende Zusammensetzung in der erfindungsgemäßen Verwendung als Spotblender oder als wesentlichem Bestandteil von Spotblendern in Spot-Repair-Verfahren einsetzen ließ, bei denen sowohl Einkomponentenklarlacke als auch Zweikomponentenklarlacke Verwendung finden. Damit ermöglicht die Zusammensetzung einen breiten Verwendungszweck und - im Gegensatz zum Stand der Technik - ist es nicht mehr erforderlich, die jeweilige Spotblender-Zusammensetzung auf Einkomponenten- bzw. Zweikomponentenklarlacke abzustimmen.

Besonders überraschend war, dass das Gemisch als wesentlicher Bestandteil Reparatur-Klarlacken zugesetzt werden konnte, wonach diese mit Vorteil als Spotblender eingesetzt werden konnten.

Darüber hinaus ermöglicht die erfindungsgemäß zu verwendende Zusammensetzung vorzugsweise die Bereitstellung von Reparaturlackierungen, die in sehr kurzer Zeit geschliffen und/oder poliert werden können, sich optisch nicht mehr von der Originallackierung anheben, kein Ausreißen oder Wegbrechen in den Auslaufzonen zeigen und von so hoher Qualität sind, dass sie auch zur KFZ-Kleinstreparatur im Teil von Originallackierungen in der Linie verwendet werden können.

Die erfindungsgemäß zu verwendende Zusammensetzung ist daher außerordentlich breit anwendbar, und die erfindungsgemäße Verwendung bringt aufgrund der technischen Vorteile für die Lackierbetriebe und deren Kunden signifikante wirtschaftliche Vorteile mit sich.

Nicht zuletzt kann die Zusammensetzung in einfacher und sehr gut reproduzierbarer Weise wirtschaftlich hergestellt werden.

Die Zusammensetzung ist mit einer Kombination aus UV-A-Strahlung und thermischer Bestrahlung oder nur mit thermischer Bestrahlung härtbar. Bekanntermaßen wird unter UV-A-Strahlung die UV-Strahlung eines Wellenlängenbereichs von λ = 300 bis 400 nm verstanden. Geeignete Lichtquellen für UV-A-Strahlung sind üblich und bekannt und werden beispielsweise in der deutschen Patentanmeldung DE 103 16 890 A1, Seite 17, Absätze [0128] bis [0130], oder in der internationalen Patentanmeldung WO 94/11123, Seite 2, Zeilen 35 bis Seite 3, Zeile 6; Seite 3, Zeilen 10 bis 15; und Seite 8, Zeilen 1 bis 14, beschrieben.

Das erfindungsgemäß zu verwendende Gemisch enthält eine Isocyanatverbindung. Typische Beispiele für geeignete Isocyanate sind aromatische Isocyanate wie 1,5-Naphthylendiisocyanat, 2,4- oder 4,4'-Diphenylmethandiisocyanat (MDI), hydriertes MDI (H₁₂MDI), Xylylendiisocyanat (XDI), Tetramethylxylylendiisocyanat (TMXDI), 4,4'- Diphenyldimethylmethandiisocyanat, Di- und Tetraalkylendiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI); aliphatische Diisocyanate wie Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat (CHDI), Ethylendiisocyanat, Phthalsäure-bis-isocyanato-ethylester, 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (Isophorondiisocyanat, IPDI); fluorierte, chlorierte und bromierte Diisocyanate, phosphorhaltige Diisocyanate wie 4,4'-Di-isocyanatophenylperfluorethan, ferner Diisocyanate mit reaktionsfähigen Halogenatomen, wie 1-Chlormethylphenyl-2,4-diisocyanat, 1-Brommethylphenyl-2,6-diisocyanat, 3,3-Bis-chlormethylether- 4,4'-diphenyldiisocyanat.

Besonders bevorzugt ist im Rahmen der vorliegenden Erfindung die Verwendung von 1-Isocyanatomethyl-3-isocyanato-1,5,5-trimethylcyclohexan (Isophorondiisocyanat, IPDI).

Auch Polyisocyanate können im Rahmen der vorliegenden Erfindung verwendet werden. Beispiele geeigneter Polyisocyanate sind in der deutschen Patentanmeldung DE 100 48 670 A1, Seite 5, Absatz [0058] bis Seite 6, Absatz [0064], oder der deutschen Patentanmeldung DE 103 16 890 A1, Seite 14, Absatz [0105] bis Seite 15, Absatz [0106], und Seite 15, Absätze [0108] und [0109] beschrieben.

Auch schwefelhaltige Polyisocyanate können verwendet werden, welche man beispielsweise durch Umsetzung von 2 mol Hexamethylendiisocyanat mit 1 mol Thiodiglykol oder Dihydroxydihexylsulfid erhält. Weitere einsetzbare Diisocyanate sind beispielsweise Trimethylhexamethylendiisocyanat, 1,4-Diisocyanatobutan, 1, 12-Diisocyanatododecan und Dimerfettsäurediisocyanat. Geeignet sind ferner: Tetramethylen-, Hexamethylen-, Undecan-, Dodecamethylen-, 2,2,4-Trimethylhexan-2,3,3-Trimethyl-hexamethylen-, 1,3-Cyclohexan-, 1,4- Cyclohexan-, 1,3- bzw. 1,4-Tetramethylxylol-, Isophoron-, 4,4-Dicyclohexylmethan-, Tetramethylxylylen-(TMXDI) und Lysinesterdiisocyanat.

Als mindestens trifunktionelle Isocyanate geeignet sind Polyisocyanate, die durch Trimerisation oder Oligomerisation von Diisocyanaten oder durch Reaktion von Diisocyanaten mit polyfunktionellen hydroxyl- oder aminogruppenhaltigen Verbindungen entstehen. Aus der Gruppe der aromatischen Polyisocyanate ist beispielsweise Methylentriphenyltriisocyanat (MIT) geeignet.

Zur Herstellung von Trimeren geeignete Isocyanate sind die bereits oben genannten Diisocyanate, wobei die Trimerisierungsprodukte der Isocyanate HDI, MDI oder IPDI besonders bevorzugt sind.

Gemäß der vorliegenden Erfindung kann als Diisocyanat bzw. Polyisocyanat ein so genanntes verkapseltes oder oberflächendesaktiviertes Diisocyanat bzw. Polyisocyanat verwendet werden, d. h. ein Diisocyanat bzw. Polyisocyanat mit retardierter Reaktivität. Verkapselte oder oberflächendesaktivierte Diisocyanat bzw. Polyisocyanate sind dem Fachmann aus dem Stand der Technik geläufig. Beispielsweise kann verwiesen werden auf die EP 0 204 970 A2 bzw. die entsprechende US-A-4 888 124, die WO 99/58590 A1 oder aber auf die EP 0 922 720 A1. Die Oberflächendesaktivierung kann beispielsweise durch Dispersion eines pulverförmigen, festen Isocyanats in einer Lösung des Desaktivierungsmittels, durch Eintragen einer Schmelze eines niederschmelzenden Isocyanats in eine Lösung des Desaktivierungsmittels in einem nichtlösenden flüssigen Dispersionsmittel oder aber durch Zugabe des Desaktivierungsmittels oder einer Lösung des Desaktivierungsmittels zu einer Dispersion der festen feinteiligen Isocyanate oder umgekehrt erfolgen. Als Desaktivierungsmittel werden insbesondere Verbindungen mit hydrophilen Gruppen wie insbesondere Aminogruppen oder Hydroxylgruppen verwendet, die mit freien Isocyanatgruppen des Isocyanats reagieren können und somit eine Art Oberflächenhülle auf den Isocyanaten ausbilden, welche die Isocyanate zunächst desaktiviert (z. B. Amine, Diamine, Polyamine, Alkohole, Diole, Polyole oder die entsprechenden Thioverbindungen). Insbesondere wird im Rahmen der vorliegenden Erfindung das Desaktivierungsmittel in Art und Menge derart ausgewählt, daß die Verkapselung oder Oberflächendesaktivierung vorzugsweise bei Temperaturen oberhalb der Raumtemperatur, insbesondere bei Temperaturen zwischen 60 °C und 160 °C, aufgebrochen wird.

Ebenfalls zum Einsatz geeignet sind die polymeren Isocyanate, wie sie beispielsweise als Rückstand im Destillationssumpf bei der Destillation von Diisocyanaten anfallen. Besonders geeignet ist hierbei das polymere MDI, wie es bei der Destillation von MDI aus dem Destillationsrückstand erhältlich ist.

Im Rahmen einer bevorzugten Ausführungform der Erfindung wird beispielsweise Desmodur N 3300, Desmodur N 100, Desmodur XP 2565 oder das IPDI-trimere Isocyanurat T 1890 (Hersteller: Bayer AG) eingesetzt.

Bei der Auswahl der Polyisocyanate ist zu beachten, dass die NCO-Gruppen mindestens eines Polyisocyanates unterschiedliche Reaktivität gegenüber mit Isocyanaten reaktive funktionelle Gruppen tragende Verbindungen besitzen. Dies trifft insbesondere auf Diisocyanate mit NCO-Gruppen in unterschiedlicher chemischer Umgebung, also auf unsymmetrische Diisocyanate zu.

Bevorzugt wird als mindestens eine Isocyanatverbindung ein Trimerisierungsprodukt eines Diisocyanates eingesetzt, da diese eine geringe Viskosität und nur ein geringes toxikologisches Gefährdungspotential aufweisen. Uretdione können jedoch auch eingesetzt werden. Besonders bevorzugt werden HDI- und/oder IPDI-Trimere eingesetzt.

Die Konzentration der Isocyanatverbindung in der Zusammensetzung unterliegt keiner besonderen Beschränkung. Es hat sich jedoch als bevorzugt herausgestellt, wenn die Konzentration des Isocyanatbestandteils in der Zusammensetzung 2 bis 30 Gew.-%, vorzugsweise 5 bis 25 Gew.-%, besonders bevorzugt 10 bis 15 Gew.-%, beträgt.

Die Zusammensetzung kann ferner mindestens einen thermisch härtbaren Reaktiverdünner und einen mit aktinischer Strahlung aktivierbaren Reaktiverdünner enthalten.

Die beiden Arten von Reaktiverdünner können auch als Lösemittel und/oder Dispergiermittel für die übrigen Bestandteile der Zusammensetzung dienen.

Beispiele geeigneter thermisch härtbarer Reaktiverdünner sind stellungsisomere Diethyloctandiole oder Hydroxylgruppen enthaltende hyperverzweigte Verbindungen oder Dendrimere, wie sie in den Patentanmeldungen DE 198 09 643 A 1, DE 198 40 605 A 1 oder DE 198 05 421 A 1 beschrieben werden.

Beispiele geeigneter mit aktinischer Strahlung härtbarer Reaktivverdünner sind die in Römpp Lexikon Lacke und Druckfarben, Georg Thieme Verlag, Stuttgart, New York, 1998, auf Seite 491 unter dem Stichwort »Reaktivverdünner« beschriebenen. Darüber hinaus kommen noch Vinylaromaten, insbesondere Styrol, in Betracht.

Als Reaktivverdünner kann der Zusammensetzung ferner ein hydroxyhaltiges Acrylat zugegeben werden. Ein bevorzugter geeigneter Reaktivverdünner ist dabei Di-pentaerythritolhexaacrylat mit einer OH-Zahl von ungefähr 100.

Der Anteil der Reaktiverdünner in der Zusammensetzung kann sehr breit variieren und unterliegt grundsätzlich keiner besonderen Beschränkung. Vorzugsweise sind sie in der Zusammensetzung in einer Menge von 1 bis 10 Gew.-%, bevorzugt 2 bis 5 Gew.-%, jeweils bezogen auf die erfindungsgemäße Zusammensetzung, enthalten.

Die Zusammensetzung enthält ferner mindestens ein organisches Lösemittel. Die Auswahl an geeigneten organischen Lösemitteln unterliegt keiner besonderen Beschränkung und es kann grundsätzlich jedes organisches Lösemittel verwendet werden. Als Lösemittel können die Zusammensetzungen gebräuchliche Lösemittel, wie aromatische, aliphatische, araliphatische oder cycloaliphatische Kohlenwasserstoffe, teilweise oder vollständig halogenierte aromatische, aliphatische, araliphatische oder cycloaliphatische Kohlenwasserstoffe, Alkohole wie Methanol, Ethanol, i-Propanol, Butanol, Benzylalkohol, Diacetonalkohol, Ester wie z.B. Ethylacetat, Propylacetat, n-Butylacetat, iso-Butylacetat, Etherester wie z. B. Methoxypropylacetat oder Butylglykolacetat, Ketone wie Aceton, Methylethylketon, Methylisobutylketon oder Cyclohexanon, stark polare Lösemittel wie Dimethylformamid und Wasser sowie Gemische davon aufweisen. Als Lösemittel geeignet sind ferner Ethylenglykolmonomethyl- oder -ethyletheracetat, 1-Methoxypropyl-2-acetat, 3-Methoxy-n-butylacetat, 2-Butanon, 4-Methyl-2-pentanon, Methylethylketon, Cyclohexanon, Toluol, Xylol, Chlorbenzol, Testbenzin, Mischungen, die vor allem höher substituierte Aromaten enthalten, wie sie beispielsweise unter den Bezeichnungen Solvent Naphtha, Solvesso® (Deutsche Exxon, Köln, DE), Cypar® (Shell, Eschborn, DE), Cyclo Sol® (Shell, Eschborn, DE), Tolu Sol® (Shell, Eschborn, DE), Shellsol® (Shell, Eschborn, DE) im Handel sind, Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton und ε-Methylcaprolacton, aber auch Lösemittel wie Propylenglykoldiacetat, Diethylenglykoldimethylether, Diethylenglykolethyl- und -butyletheracetat und N-Methylcaprolactam oder beliebige Gemische solcher Lösemittel.

Besonders bevorzugt werden n-Butylacetat-, iso-Butylacetat und/oder Xylol eingesetzt.

Die Zusammensetzung kann ferner mindestens einen Zusatzstoff enthalten. Die Auswahl an geeigneten Zusatzstoffen unterliegt keiner besonderen Beschränkung und es kann grundsätzlich jeder Zusatzstoff verwendet werden.

Beispiele geeigneter Zusatzstoffe sind übliche und bekannte farb- und/oder effektgebende Pigmente, Füllstoffe, Nanopartikel, Vernetzungsmittel, UV-Absorber, Lichtschutzmittel, Radikalfänger, Initiatoren für die radikalische Polymerisation, Katalysatoren für die thermische Vernetzung, Slipadditive, Polymerisationsinhibitoren, Entschäumer, Emulgatoren, Entgasungsmittel, Netz- und Dispergiermittel, Haftvermittler, Verlaufmittel, filmbildende Hilfsmittel, rheologiesteuernde Additive (Verdicker), Flammschutzmittel, Sikkative, Trocknungsmittel, Hautverhinderungsmittel, Korrosionsinhibitoren, Wachse und Mattierungsmittel, wie sie aus dem Lehrbuch »Lackadditive« von Johan Bieleman, Wiley-VCH, Weinheim, New York, 1998, bekannt sind.

Die Konzentration der Zusatzstoffe in der Zusammensetzung unterliegt keiner besonderen Beschränkung und kann von Zusatzstoff zu Zusatzstoff variieren. Es hat sich jedoch als bevorzugt herausgestellt, wenn die Konzentration des Zusatzstoffbestandteils in der erfindungsgemäßen Zusammensetzung 0,1 bis 6 Gew.-%, vorzugsweise 0,3 bis 1 Gew.-% beträgt.

Es ist ein weiterer Vorteil der Zusammensetzungen, dass diese mit einem sehr hohen Festkörperanteil hergestellt werden können. Somit wird die Herstellung von Zusammensetzungen mit niedrigem VOC-Anteil ermöglicht. Die Zusammensetzungen können einen Festkörperanteil von 5 bis 100 Gew.-%, bevorzugt 40 bis 60 Gew.-% aufweisen.

Vorzugsweise wird das erfindungsgemäß zu verwendende Gemisch mit Hilfe des folgenden Verfahrens hergestellt. Bei dem Verfahren werden die vorstehend beschriebenen Bestandteile, falls vorhanden, miteinander vermischt, wonach man die resultierende Mischung homogenisiert. Bevorzugt werden dabei die üblichen und bekannten Mischverfahren und Vorrichtungen wie Rührkessel, Rührwerksmühlen, Extruder, Kneter, Ultraturrax, In-line-Dissolver, statische Mischer, Mikromischer, Zahnkranzdispergatoren, Druckentspannungsdüsen und/oder Microfluidizer vorzugsweise unter Ausschluß von aktinischer Strahlung, eingesetzt.

Das erfindungsgemäß zu verwendende Gemisch kann an und für sich zahlreichen Anwendungszwecken dienen. Insbesondere wird es im Rahmen der erfindungsgemäßen Verwendung als Spotblender in einem Spot-Repair-Verfahren oder zur Herstellung eines solchen Spotblender eingesetzt.

Das Spot-Repair-Verfahren umfasst die folgenden Verfahrensschritte:
(1) Reinigung der Schadstelle und ihrer Umgebung,
(2) Schleifen und erneute Reinigung der Schadstelle,
(3) gegebenenfalls Spachteln, Schleifen und Reinigen der Schadstelle,
(4) Applikation eines Füllers und Ablüften der resultierenden Füllerschicht oder alternativ Härten der Füllerschicht und Schleifen und Reinigen der resultierenden Füllerlackierung,
(5) Applikation eines Basislacks auf der Füllerschicht oder der Füllerlackierung, Ablüften der resultierenden Basislackschicht und gegebenenfalls Entfernen des Overspray,
(6) Nass-in-nass-Applikation eines Klarlacks auf die Basislackschicht,
(7) Applikation der erfindungsgemäßen Spotblender-Zusammensetzung und
(8) Härten der applizierten Schichten,

Für das Spot-Repair-Verfahren ist es vorteilhaft, dass der Basislack durch pneumatische Applikation mit einer Sprühpistole deckend von außen, d. h. von der Originallackierung her, nach innen, d. h. zum Zentrum der Schadstelle hin, aufgetragen wird. Außerdem ist es wesentlich dass man als Spotblender das vorstehend im Detail beschriebene Gemisch verwendet.

Für die pneumatische Applikation der Beschichtungsstoffe können an und für sich übliche und bekannte Sprühpistolen verwendet werden. Erfindungsgemäß ist es indes von Vorteil, kleinere Sprühpistolen als die üblichen und bekannten zu verwenden. Solche kleindimensionierten Sprühpistolen sind von der Firma SATA, Kornwestheim, unter dem Handelsnamen SATA minijet 2 HVLP SR (Spot-Repair) erhältlich.

Für die Reinigung und das Schleifen können die Reinigungsgeräte und -flüssigkeiten sowie Schleif- und/oder Poliergeräte verwendet werden, wie sie üblicherweise für die Kraftfahrzeugreparaturlackierung eingesetzt werden.

Für das Spachteln können übliche und bekannte Spachtel, insbesondere mit UV-Strahlung härtbare Spachtel, wie die der Firma BASF Coatings AG angewandt werden.

Als Füller kommen übliche und bekannte wässrige und konventionelle Füller in Betracht, wie sie beispielsweise in den Patenten und Patentanmeldungen US 4,537,926 A , EP 0 529 335 A1, EP 0 595 186 A1, EP 0 639 660 A1, DE 44 38 504 A1, DE 43 37 961 A1, WO 89/10387, US 4,450,200 A, US 4,614,683 A oder WO 94/26827 beschrieben werden. Es können auch mit UV-Strahlung härtbare Füller eingesetzt werden.

Die Füller sind handelsübliche Produkte, die beispielsweise von der Firma BASF Coatings AG unter der Marke Glasurit® 1 K-Grundfüller 76-71 vertrieben werden.

Beispiele geeigneter konventioneller oder wäßriger Basislacke sind aus den Patentanmeldungen EP 0 089 497 A1, EP 0 256 540 A1, EP 0 260 447 A1, EP 0 297 576 A1, WO 96/12747, EP 0 523 610 A1, EP 0 228 003 A1, EP 0 397 806 A1, EP 0 574 417 A1, EP 0 531 510 A1, EP 0 581 211 A1, EP 0 708 788 A1, EP 0 593 454 A1, DE-A-43 28 092 A1, EP 0 299 148 A1, EP 0 394 737 A1, EP 0 590 484 A1 , EP 0 234 362 A1, EP 0 234 361 A1, EP 0 543 817 A1, WO 95/14721, EP 0 521 928 A1, EP 0 522 420 A1, EP 0 522 419 A1, EP 0 649 865 A1, EP 0 536 712 A1, EP 0 596 460 A1, EP 0 596 461 A1, EP 0 584 818 A1, EP 0 669 356 A1, EP 0 634 431 A1, EP 0 678 536 A1, EP 0 354 261 A1, EP 0 424 705 A1, WO 97/49745, WO 97/49747, EP 0 401 565 A1 oder EP 0 817 684, Spalte 5, Zeilen 31 bis 45, bekannt. Es können auch die Basislacke auf der Grundlage des Mischsystems verwendet werden, das in der europäischen Patentanmeldung EP 0 578 645 A1 beschrieben wird.

Die Basislacke sind handelsübliche Produkte, die beispielsweise von der Firma BASF Coatings AG unter den Marken Glasurit® Decklack-Reihe 55 mit Glasurit( Einstellenzusatz 352-91 oder Glasurit( Decklack-Reihe 90 mit Glasurit( Einstellenzusatz 93-E 3 und Glasurit( Beispritzlack 90-M5 gemäß der europäischen Patentanmeldung EP 0 578 645 A1 vertrieben werden.

Es ist ein ganz besonderer Vorteil des Gemischs und seiner erfindungsgemäßen Verwendung, dass im Rahmen des erfindungsgemäßen Spot-Repair-Verfahrens
- physikalisch härtbare,
- thermisch härtbare,
- mit aktinischer Strahlung, vorzugsweise mit UV-Strahlung, insbesondere mit UV-A-Strahlung, härtbare oder
- Dual-Cure-härtbare Reparatur-Klarlacke,
vorzugsweise mit UV-A-Strahlung oder thermisch und mit UV-A-Strahlung (Dual-Cure-) härtbare Reparatur-Klarlacke, eingesetzt werden können.

Im Rahmen der vorliegenden Erfindung bedeutet der Begriff »physikalische Härtung« die Härtung einer Schicht aus einem Reparatur-Klarlacke durch Verfilmung, wobei die Verknüpfung innerhalb der Schicht über Schlaufenbildung der Polymermoleküle der vorhandenen Bindemittel erfolgt. Oder aber die Verfilmung erfolgt über die Koaleszenz von Bindemittelteilchen (vgl. Römpp Lexikon Lacke und Druckfarben, Georg Thieme Verlag, Stuttgart, New York, 1998, »Härtung«, Seiten 274 und 275). Somit kann die physikalische Härtung gegebenenfalls auch die Härtung der Reparatur-Klarlacke durch Hitze oder durch Bestrahlen mit aktinischer Strahlung unterstützen.

Die thermisch härtbaren Reparatur-Klarlacke können selbst vernetzend und/oder fremd vernetzend sein.

Im Rahmen der vorliegenden Erfindung bezeichnet der Begriff »selbst vernetzend« die Eigenschaft eines im Reparatur-Klarlack vorhandenen Bindemittels (zu dem Begriff vgl. Römpp Lexikon Lacke und Druckfarben, Georg Thieme Verlag, Stuttgart, New York, 1998, »Bindemittel«, Seiten 73 und 74) mit sich selbst Vernetzungsreaktionen einzugehen. Voraussetzung hierfür ist, dass in den Bindemitteln bereits beide Arten von komplementären reaktiven funktionellen Gruppen enthalten sind, die für eine Vernetzung notwendig sind, oder reaktive funktionelle Gruppen, die "mit sich selbst" reagieren.

Als fremd vernetzend werden dagegen solche Reparatur-Klarlacke, bezeichnet, worin eine Art der komplementären reaktiven funktionellen Gruppen in dem vorhandenen Bindemittel und die andere Art in einem vorhandenen Härter oder Vernetzungsmittel vorliegen. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen. Beispiele geeigneter komplementärer reaktiver funktioneller Gruppen sind aus der Patentanmeldung DE 100 42 152 A1, Seite 7, Absatz [0078], bis Seite 9, Absatz [0081], bekannt.

Die Reparatur-Klarlacke können auch nur mit aktinischer Strahlung härtbar sein. Hierbei erfolgt die Härtung über die vorstehend beschriebenen Gruppen, die Bindungen enthalten, die mit aktinischer Strahlung aktivierbar sind.

Die Reparatur-Klarlacke sind vorzugsweise thermisch und mit aktinischer Strahlung härtbar.

Beispiele geeigneter mit UV-Strahlung härtbarer Reparatur-Klarlacke sind aus dem deutschen Patent DE 197 09 467 C1 bekannt.

Bevorzugt werden die Dual-Cure-härtbaren Reparatur-Klarlacke aus Mehrkomponentensystemen, insbesondere Zweikomponentensystemen, die Polyisocyanate als Härter enthalten, hergestellt. Beispiele geeigneter Dual-Curehärtbarer Reparatur-Klarlacke sind aus den deutschen Patentanmeldungen DE 103 16 890 A1, DE 103 00 798 A1, DE 102 02 565 A1, DE 100 42 152 A1, DE 102 04 114 A1, DE 100 48 847 A1, DE 100 48 849 A1, DE 100 48 275 A1 oder DE 100 48 670 A1 bekannt. Ein Beispiel für einen besonders gut geeigneten Dual-Cure-härtbaren Reparatur-Klarlack ist der Reparatur-Klarlack, der aus dem von BASF Coatings AG vertriebenen Mehrkomponentensystem, das 2K UVA Klarlack, Glasurit® VOC-Decklack-Härter kurz 929-31 und Glasurit® Einstellzusatz 352-91 umfasst, hergestellt wird.

Ein weiterer ganz besonderer Vorteil des erfindungsgemäßen Gemischs und seiner erfindungsgemäßen Verwendung besteht darin, dass im Rahmen des erfindungsgemäßen Spot-Repair-Verfahrens das erfindungsgemäße Gemisch den jeweils verwendeten Reparatur-Klarlacken zugesetzt werden kann, wonach die resultierenden Gemische wiederum als Spotblender eingesetzt werden können. Dadurch resultiert eine herausragende Haftung des Spotblender auf den Reparaturlackierungen und den Originallackierungen.

Die thermische Härtung der bei dem erfindungsgemäßen Spot-Repair-Verfahren applizierten Beschichtungsstoffe und des applizierten erfindungsgemäßen Gemischs weist keine Besonderheiten auf, sondern erfolgt mit üblichen und bekannten Vorrichtungen, wie Heizgebläsen sowie Heizstrahlern, die nahes und fernes Infrarot abstrahlen. Die angewandten Temperaturen und die Dauer der Erwärmung richten sich nach den Erfordernissen des Einzelfalls, insbesondere nach der Reaktivität der thermisch härtbaren Bestandteile, und können vom Fachmann in einfacher Weise aufgrund seines allgemeinen Fachwissens und seines handwerklichen Könnens ausgewählt und eingestellt werden.

Die Härtung der bei dem erfindungsgemäßen Spot-Repair-Verfahren applizierten Dual-Cure-härtbaren Reparatur-Klarlacke und dem applizierten erfindungsgemäßen Gemisch mit UV-A-Strahlung weist ebenfalls keine Besonderheiten auf, sondern erfolgt mit den üblichen und bekannten Lichtquellen, wie sie eingangs beschrieben werden. Schattenzonen können dabei mit Hilfe von Aluminiumfolien als Spiegel oder Reflektoren belichtet werden. Die Dauer der Belichtung und die eingestrahlte Strahlendosis richtet sich nach den Erfordernissen des Einzelfalls, insbesondere nach der Reaktivität der mit UV-A-Strahlung härtbaren Bestandteile, und können vom Fachmann in einfacher Weise aufgrund seines allgemeinen Fachwissens und seines handwerklichen Könnens ausgewählt und eingestellt werden.

Die UV-A-Lichtquellen können in üblicher und bekannter Weise mit Filtern versehen sein, sodass die Härtung der applizierten Dual-Cure-härtbaren Reparatur-Klarlacke abwechselnd mit IR-Strahlung, d. h. thermisch, und mit UV-A-Strahlung erfolgen kann.

Das erfindungsgemäße Spot-Repair-Verfahren eignet sich insbesondere für den Spot-Repair von Schäden bis 4 bis 5 cm Durchmesser. Die Schadstelle soll ohne Deformationen wie Beulen, Kratzer oder Steinschläge sein. Besonders empfehlenswert ist der Spot-Repair an stehenden Flächen. Bei liegenden Flächen wird das Spot-Repair-Verfahren vorteilhafterweise im Nahbereich von Kanten (Abstand bis zu 15 cm) angewandt.

Die erfindungsgemäße Verwendung und das erfindungsgemäße Spot-Repair-Verfahren liefern Reparaturlackierungen die in sehr kurzer Zeit geschliffen und/oder poliert werden können, sich optisch nicht mehr von der Originallackierung abheben, kein Ausreißen oder Wegbrechen in den Auslaufzonen mehr zeigen und von so hoher Qualität sind, dass sie auch zur KFZ-Kleinstreparatur im Teil von Originallackierungen in der Linie verwendet werden können.

Völlig überraschend ist dabei das Ergebnis, dass durch die erfindungsgemäße Verwendung und das erfindungsgemäße Spot-Repair-Verfahren Vermattungen und ähnliche Lackstörungen von Reparatur-Basislackierungen, die plättchenförmige Aluminiumeffektpigmente enthalten, völlig vermieden werden können.

Die vorliegende Erfindung wird anhand der nachfolgenden Beispiele näher erläutert, welche die vorliegende Erfindung jedoch nicht beschränken.

### Beispiele

### Beispiel 1

### Herstellung erfindungsgemäßen Zusammensetzung

In einem geeigneten Rührgefäß wurden unter Ausschluss von aktinischer Strahlung 18 Gewichtsteile Xylol, 23 Gewichtsteile Isobutylacetat, 43,5 Gewichtsteile n-Butylacetat, 12,0 Gewichtsteile trimeres Isophorondiisocyanat, 3 Gewichtsteile 1-Methoxy-2-propylacetat, 0,2 Gewichtsteile Dibutylzinndilaurat, 0,2 Gewichtsteile BYK^{®}-358 N (Acrylatcopolymer) und 0,1 Gewichtsteil BYK^{®}-340 (polymeres Fluortensid) miteinander vermischt und die resultierende Mischung homogenisiert. Das resultierende Gemisch 1 konnte unter Ausschluss von aktinischer Strahlung problemlos gelagert und zu den Anwendern transportiert werden. Es war hervorragend als Spotblender für Spot-Repair-Verfahren, bei denen die unterschiedlichsten Reparatur-Klarlacke zur Anwendung kamen, geeignet.

### Beispiel 2

### KFZ-Kleinstreparatur im Teil (Spot-Repair)

### Lackschaden:

Bei der zur reparierenden Schadstelle handelt es sich um einen 4 bis 5 cm langen Kratzer in einer silbermetallic lackierten PKW-Tür, der durch einen Schlüssel verursacht worden war und zum Teil bis zum Substrat hinunter reichte.

### Maßnahmen:

Es wurden die nachstehend angegebenen Vorrichtungen, Stoffe und Verfahrenschritte in der angegebenen Reihenfolge angewandt.

### Reinigen:

1. Sprühdose mit Teroson® Intensiv-Scheibenreiniger
2. Finish-Kontrollspray 55535 der Firma 3M
3. Sprühflasche mit Nitroverdünnung M600 der Firma Akzo
4. Putztücher Kimberley Clark Classic®

### Schleifen:

Lackpfeile®
Schleifblüte® P 1500 der Firma 3M

### Spachteln:

Spachtel der Firma BASF Coatings AG
Ablüftzeit: 10 Minuten/20°C
Schleifen: nass (Sprühflasche) mit Schleifblüte® P 1000 der Firma 3M

### Abkleben:

Papier und Abdeckband der Firma 3M

### Basislack:

Glasurit® Zweischicht Decklack Reihe 90 mit silbermetallic-Effekt der Firma BASF Coatings AG
Sprühpistole: SATA minijet 2 HVLP SR; Spritzdruck: 1,5 bar
Schadstelle von außen zum Zentrum hin deckend und auslaufend großflächig in die Fläche gespritzt
Ablüften: zwei bis drei Minuten nach jedem Spritzgang
Abwischen mit Staubbindetuch

### Mit UV-A-Strahlung härtbarer Klarlack:

Glasurit® 2K UVA Klarlack und Glasurit® VOC-Decklack-Härter kurz 929-31 im
Verhältnis von 2: 1 + 10% Glasurit® Einstellzusatz 352-91
Sprühpistole: SATA minijet 2 HVLP SR; Spritzdruck: 1,5 bar
Schadstelle von außen zum Zentrum hin auslaufend großflächig in zwei Spritzgängen in die Fläche gespritzt
Ablüften: zwei bis drei Minuten nach jedem Spritzgang

### Mit UV-A-Strahlung härtbarer Spotblender:

Gemisch 1 gem. Beispiel 1
Sprühpistole: SATA minijet 2 HVLP SR; Spritzdruck: 1,5 bar
Spotblender über die Auslaufzonen des Klarlacks gespritzt

### Härtung:

### Hintereinander:

1. UVA-Strahler: Panacol 900 (Abstand: 20 cm; Dauer: ca. 90 Sekunden), 5 Minuten IR-Strahlung anschließend ca. 4000 mJ/cm² UVA-Strahlung
2. Kombi-Strahler: Panacol 900 oder INP (Abstand: 20 cm, Dauer: 5 Minuten), 5 Minuten IR während der letzten 90 Sekunden UVA (ca. 4000 mJ/cm²)

Die resultierende Reparaturlackierung war sofort polierbar, sehr leicht zu polieren und optisch und mechanisch hervorragend an die Originallackierung angepasst. Es waren keine Vermattungen oder andere Lackstörungen zu beobachten.

## Patentansprüche

1. Verwendung einer bindemittelfreien Zusammensetzung für Einkomponenten- und Zweikomponentenklarlacke, welche mindestens 2 bis 30 Gew.-% einer Isocyanatverbindung und mindestens ein organisches Lösemittel enthält, als Spotblender in der Kraftfahrzeugreparaturlackierung, insbesondere in der KFZ-Kleinstreparatur im Teil (Spot-Repair).

2. Verwendung nach Anspruch 1, **dadurch gekennzeichnet, dass** die Isocyanatverbindung ein aromatisches Isocyanat, ausgewählt aus der Gruppe bestehend aus 1,5-Naphthylendiisocyanat, 2,4- oder 4,4'-Diphenylmethandiisocyanat (MDI), hydriertes MDI (H₁₂MDI), Xylylendiisocyanat (XDI), Tetramethylxylylendiisocyanat (TMXDI), 4,4'-Diphenyldimethylmethandiisocyanat, Di- und Tetraalkylendiphenylmethandiisocyanat, 4,4'-Dibenzyldiisocyanat, 1,3-Phenylendiisocyanat, 1,4-Phenylendiisocyanat und den Isomeren des Toluylendiisocyanats (TDI) ist.

3. Verwendung nach Anspruch 1 oder 2, **dadurch gekennzeichnet, dass** die Isocyanatverbindung ein aliphatisches Isocyanat, ausgewählt aus der Gruppe, bestehend aus Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat (CHDI), Ethylendiisocyanat, Phthalsäure-bis-isocyanato-ethylester, 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (Isophorondiisocyanat, IPDI); fluorierte, chlorierte und bromierte Diisocyanate, phosphorhaltige Diisocyanate wie 4,4'-Di-isocyanatophenylperfluorethan und Diisocyanaten mit reaktionsfähigen Halogenatomen, wie 1 -Chlormethylphenyl-2,4-diisocyanat, 1-Brommethylphenyl-2,6-diisocyanat und 3,3-Bis-chlormethylether-4,4'-diphenyldiisocyanat ist.

4. Verwendung nach einem der Ansprüche 1 bis 3, **dadurch gekennzeichnet, dass** die Isocyanatverbindung ein Trimerisierungsprodukt eines Diisocyanats ist.

5. Verwendung nach Anspruch 4, **dadurch gekennzeichnet, dass** die Isocyanatverbindung ein HDI- und/oder IPDI-Trimer ist.

6. Verwendung nach Anspruch 1 bis 5, **dadurch gekennzeichnet, dass** das Lösemittel ausgewählt aus der Gruppe n-Butylacetat, iso-Butylacetat und Xylol ist.

7. Verwendung nach einem der Ansprüche 1 bis 6, **dadurch gekennzeichnet, dass** die Zusammensetzung einen thermisch härtbaren Reaktivverdünner und/oder einen mit aktinischer Strahlung aktivierbare Reaktivverdünner enthält.

8. Verwendung nach Anspruch 7, **dadurch gekennzeichnet, dass** der Reaktivverdünner ein hydroxyfunktionelles Acrylat ist.

9. Verwendung nach Anspruch 8, **dadurch gekennzeichnet, dass** der Reaktivverdünner Di-pentaerythritolhexaacrylat ist.

10. Verwendung nach einem der Ansprüche 7 bis 9, **dadurch gekennzeichnet, dass** der Reaktivverdünner in einer Menge von 1 bis 10 Gew.-% enthalten ist.

11. Verwendung nach einem der Ansprüche 1 bis 10, **dadurch gekennzeichnet, dass** sie einen Festkörperanteil von 5 bis 100 Gew.-% aufweist.

## Claims

1. Use of a binder-free composition for one- and two-component clearcoat materials which comprises at least 2% to 30% by weight of an isocyanate compound and at least one organic solvent, as a spot blender in automotive refinish, more particularly in automotive spot repair.

2. Use according to Claim 1, **characterized in that** the isocyanate compound is an aromatic isocyanate selected from the group consisting of 1,5-naphthylene diisocyanate, 2,4- or 4,4'-diphenylmethane diisocyanate (MDI), hydrogenated MDI (H₁₂MDI), xylylene diisocyanate (XDI), tetramethylxylylene diisocyanate (TMXDI), 4,4'-diphenyldimethylmethane diisocyanate, di- and tetraalkylenediphenylmethane diisocyanate, 4,4'-dibenzyl diisocyanate, 1,3-phenylene diisocyanate, 1,4-phenylene diisocyanate, and the isomers of tolylene diisocyanate (TDI).

3. Use according to Claim 1 or 2, **characterized in that** the isocyanate compound is an aliphatic isocyanate selected from the group consisting of tetramethoxybutane 1,4-diisocyanate, butane 1,4-diisocyanate, hexane 1,6-diisocyanate (HDI), dicyclohexylmethane diisocyanate, cyclohexane 1,4-diisocyanate (CHDI), ethylene diisocyanate, bisisocyanatoethyl phthalate, 1-methyl-2,4-diisocyanatocyclohexane, 1,6-diisocyanato-2,2,4-trimethylhexane, 1,6-diisocyanato-2,4,4-trimethylhexane, 1-isocyanatomethyl-3-isocyanato-1,5,5-trimethylcyclohexane (isophorone diisocyanate, IPDI); fluorinated, chlorinated, and brominated diisocyanates, phosphorus-containing diisocyanates such as 4,4'-diisocyanatophenylperfluoroethane and diisocyanates containing reactive halogen atoms, such as 1-chloromethylphenyl 2,4-diisocyanate, 1-bromomethylphenyl 2,6-diisocyanate, and 3,3-bischloromethyl ether 4,4'-diphenyl diisocyanate.

4. Use according to any one of Claims 1 to 3, **characterized in that** the isocyanate compound is a trimerization product of a diisocyanate.

5. Use according to Claim 4, **characterized in that** the isocyanate compound is an HDI trimer and/or IPDI trimer.

6. Use according to Claim 1 to 5, **characterized in that** the solvent is selected from the group consisting of n-butyl acetate, isobutyl acetate, and xylene.

7. Use according to any one of Claims 1 to 6, **characterized in that** the composition comprises a thermally curable reactive diluent and/or a reactive diluent activable with actinic radiation.

8. Use according to Claim 7, **characterized in that** the reactive diluent is a hydroxyl-functional acrylate.

9. Use according to Claim 8, **characterized in that** the reactive diluent is dipentaerythritol hexaacrylate.

10. Use according to any one of Claims 7 to 9, **characterized in that** the reactive diluent is present in an amount of 1% to 10% by weight.

11. Use according to any one of Claims 1 to 10, **characterized in that** it has a solids fraction of 5% to 100% by weight.

## Revendications

1. Utilisation d'une composition sans liant pour vernis transparents à un composant et à deux composants, qui contient au moins 2 à 30 % en poids d'un composé d'isocyanate et au moins un solvant organique, en tant que mélangeur instantané dans le vernissage de réparation d'automobiles, notamment dans la petite réparation automobile en partie (spot repair).

2. Utilisation selon la revendication 1, **caractérisée en ce que** le composé d'isocyanate est un isocyanate aromatique, choisi dans le groupe constitué par le diisocyanate de 1,5-naphtylène, le diisocyanate de 2,4-ou 4,4'-diphénylméthane (MDI), le MDI hydrogéné (H₁₂MDI), le diisocyanate de xylylène (XDI), le diisocyanate de tétraméthylxylylène (TMXDI), le diisocyanate de 4,4'-diphényldiméthylméthane, le diisocyanate de di- et tétraalkylène-diphénylméthane, le diisocyanate de 4,4'-dibenzyle, le diisocyanate de 1,3-phénylène, le diisocyanate de 1,4-phénylène et les isomères du diisocyanate de toluylène (TDI).

3. Utilisation selon la revendication 1 ou 2, **caractérisée en ce que** le composé d'isocyanate est un isocyanate aliphatique, choisi dans le groupe constitué par le 1,4-diisocyanate de tétraméthoxybutane, le 1,4-diisocyanate de butane, le 1,6-diisocyanate d'hexane (HDI), le diisocyanate de dicyclohexylméthane, le 1,4-diisocyanate de cyclohexane (CHDI), le diisocyanate d'éthylène, l'ester bis-isocyanato-éthylique de l'acide phtalique, le 1-méthyl-2,4-diisocyanato-cyclohexane, le 1,6-diisocyanato-2,2,4-triméthylhexane, le 1,6-diisocyanato-2,4,4-triméthylhexane, le 1-isocyanatométhyl-3-isocyanato-1,5,5-triméthylcyclohexane (diisocyanate d'isophorone, IPDI) ; les diisocyanates fluorés, chlorés et bromés, les diisocyanates phosphorés tels que le 4,4'-diisocyanatophénylperfluoroéthane et les diisocyanates contenant des atomes d'halogène réactifs, tels que le 2,4-diisocyanate de 1-chlorométhylphényle, le 2,6-diisocyanate de 1-bromométhylphényle et le 4,4'-diphényldiisocyanate d'éther 3,3-bis-chlorométhylique.

4. Utilisation selon l'une quelconque des revendications 1 à 3, **caractérisée en ce que** le composé d'isocyanate est un produit de trimérisation d'un diisocyanate.

5. Utilisation selon la revendication 4, **caractérisée en ce que** le composé d'isocyanate est un trimère d'HDI et/ou d'IPDI.

6. Utilisation selon les revendications 1 à 5, **caractérisée en ce que** le solvant est choisi dans le groupe constitué par l'acétate de n-butyle, l'acétate d'isobutyle et le xylène.

7. Utilisation selon l'une quelconque des revendications 1 à 6, **caractérisée en ce que** la composition contient un diluant réactif durcissable thermiquement et/ou un diluant réactif activable avec un rayonnement actinique.

8. Utilisation selon la revendication 7, **caractérisée en ce que** le diluant réactif est un acrylate à fonction hydroxy.

9. Utilisation selon la revendication 8, **caractérisée en ce que** le diluant réactif est l'hexaacrylate de di-pentaérythritol.

10. Utilisation selon l'une quelconque des revendications 7 à 9, **caractérisée en ce que** le diluant réactif est contenu en une quantité de 1 à 10 % en poids.

11. Utilisation selon l'une quelconque des revendications 1 à 10, **caractérisée en ce qu'**elle présente une teneur en solides de 5 à 100 % en poids.
